# EUROPÄISCHE PATENTSCHRIFT

(11) **EP 4 274 791 B1**
(45) Veröffentlichungstag und Bekanntmachung des Hinweises auf die Patenterteilung: **24.07.2024**
(21) Anmeldenummer: 23701654.8
(22) Anmeldetag: 20.01.2023
(51) Int. Cl.: B65G 57/00, B65G 57/03, B65G 59/02, B65G 61/00

(54) **VERFAHREN ZUM STAPELN VON PLATTENFÖRMIGEN ERZEUGNISSEN**
METHOD FOR STACKING PLATE-SHAPED PRODUCTS
PROCEDE D'EMPILEMENT DE PRODUITS EN PLAQUES

(30) Priorität: 28.01.2022 DE 102022102075
(43) Veröffentlichungstag der Anmeldung: 15.11.2023
(73) Patentinhaber: IMA Schelling Deutschland GmbH, 32312 Lübbecke (DE)
(72) Erfinder: BODE, Jan Frederik, 32427 Minden (DE); KECKEIS, Thomas, 6845 Hohenems (AT)
(74) Vertreter: Schober, Mirko
(86) Internationale Anmeldenummer: PCT/EP2023/051312
(87) Internationale Veröffentlichungsnummer: WO 2023/144021

(56) Entgegenhaltungen:
- EP-B1- 2 508 276
- DE-A1- 4 337 450
- DE-U1- 202010 011 298
- FR-A1- 2 225 369
- JP-U- S5 538 753
- KR-B1- 101 457 023
- US-A- 3 200 969
- US-A- 5 026 249

## Beschreibung

### Technisches Gebiet

Die Erfindung betrifft ein Verfahren zum Stapeln von plattenförmigen Erzeugnissen nach dem Oberbegriff des Anspruchs 1 und ein Verfahren zum Auflösen von Stapeln aus plattenförmigen Erzeugnissen nach dem Oberbegriff des Anspruchs 6.

### Stand der Technik

Im Stand der Technik sind Verfahrensweisen bekannt, mit denen Stapel von Gegenständen gebildet und ggf. palettiert werden. Aus DE 43 37 450 A1 ist ein Reifelager bekannt, in welchem Stapel von Käsestücken gebildet werden. Diese werden innerhalb von Containern gestapelt, welche auf Paletten angeordnet sind. Die Stapel in den Containern können durch herausnehmbare Trennwände getrennt sein.

Aus KR 101 457 023 B1 ist ein Verfahren zum Stapeln von plattenförmigen Erzeugnissen aus Holz oder Holzersatzstoffen bekannt. Hier werden auf einer Unterlage 2 benachbart angeordnete Stapel aus Platten gebildet. Dazu wird zunächst ein Stapel auf der Unterlage ausgebildet und sodann ein weiterer Stapel aus Platten auf der Unterlage aus erzeugt.

Aus US 5 026 249 A wird ein Verfahren zum Stapeln von Platten offenbart, bei welchem Trendelemente, die Teil einer Stapelvorrichtung sind, eingesetzt werden, um benachbarte Stapel voneinander zu trennen.

Aus EP 2 508 276 B1 ist eine Vorrichtung bekannt welche ein Stapelgerät aufweist, die eine Einrichtung zum Aufnehmen und Ablegen von Platten umfasst. Weiter umfasst diese Vorrichtung eine schwenkbar ausgebildete Tagvorrichtung, die zur Aufnahme der Platten ausgebildet ist.

US 4,538,511 beschreibt eine Handlingvorrichtung für Papierstapel oder dergleichen. Zur Konfektionierung auf Paletten oder dergleichen wird ein Stapel geneigt und angehoben. Dann wird eine Bodenplatte unter den Stapel geschoben. Solche Stapel können dann in Folie eingewickelt und palettiert werden.

Aus US 2012/0175217 A1 ist ein Behältersystem zur Verarbeitung von Banknoten bekannt. Eine Vereinzelungseinrichtung kann die einer Greifeinrichtung zugeführten Stapel aus Banknoten vereinzeln, wozu der Stapel mit Hilfe des Greifers gehalten und relativ zur Vertikalrichtung geneigt wird.

Schließlich beschreibt DE 20 2006 005 271 U1 eine Beladehilfe in Gestalt einer im Querschnitt kreuzförmigen Trennwand. Diese dient zur Ausrichtung von auf Paletten angeordneten Stapeln. Die Beladehilfe dient dazu, bei der Verfrachtung von Paletten dieselben möglichst dicht aneinander anzuordnen.

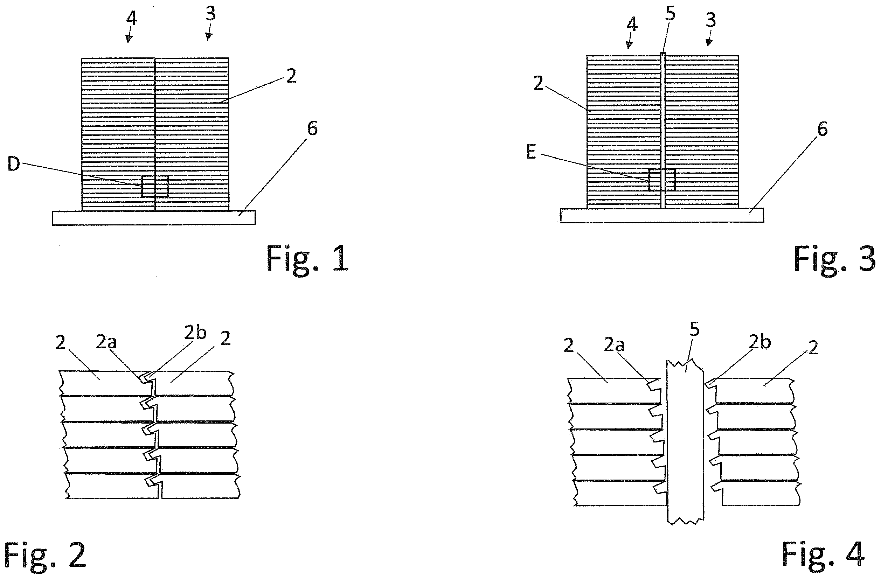

Beim Stapeln von plattenförmigen Erzeugnissen 2 aus Holz oder Holzersatzstoffen werden üblicherweise auf einer Unterlage 6 wie z. B. einer Palette oder Schonplatte in der Regel eine Mehrzahl benachbarte Stapel 3, 4 abgelegt, wie dies in Fig. 1 dargestellt ist. Um die Transportkosten möglichst gering zu halten, wird versucht, den auf einer Palette oder Schonplatte zur Verfügung stehenden Platz zu minimieren, d. h. benachbarte Stapel möglichst eng aneinander zu setzen. Während bei Stapeln aus Platten 2 mit prinzipiell ebenen Schmalseiten keine Probleme auftreten, so gibt es bei Platten mit profilierten Schmalseiten oder bei dünnen Platten 2a und 2b (vgl. Fig. 2, die das Detail D aus Fig. 1 zeigt) oder mit Dübeln, ähnlichen Bauteilen oder filigranen Profilierungen oder in den Schmalseiten das Problem, dass Platten benachbarter Stapel sich beim Abstapeln oder nachfolgendem Transport ineinander verhaken können. Dies führt zu Problemen, wenn entsprechende Paletten 6 abgeladen und die einzelnen Stapel 3, 4 wieder aufgelöst werden.

Wie in Fig. 3 gezeigt, bedient man sich zur Lösung dieses Problems eines Trennelements 5, bevorzugt einer Trennplatte, Trennstreifen oder Trennwand oder dergleichen, die zwischen benachbarten Stapeln eingebracht wird, vgl. Fig. 3. In der Regel geschieht dies so, dass nach Fertigstellen eines ersten Stapels 3 eine Trennwand 5 an den Stapel 3 angestellt und sodann ein weiterer Stapel 4 errichtet wird. Aufgrund dieses Trennelements 5 werden problematische Schmalseiten 2a und 2b beim Abstapeln und beim Transport voneinander getrennt gehalten und können sich nicht verhaken, Fig. 4.

Eine Schwierigkeit bei dieser Vorgehensweise besteht allerdings darin, dass Trennelemente in der Regel dünne Trennwände sind, beim Abstapeln auf einer Schmalseite stehen und daher umfallen können.

### Die Erfindung

Aufgabe der vorliegenden Erfindung ist es daher, ein Verfahren der eingangs genannten Art sowie eine hierfür geschaffene Vorrichtung anzugeben, bei denen das Abstapeln und auch das Auflösen von mehreren Stapeln aus plattenförmigen Erzeugnissen unter Einbringung eines Trennelements erleichtert wird.

Gelöst wird diese Aufgabe durch ein Stapelverfahren mit den Merkmalen des Anspruchs 1, ein Verfahren zum Auflösen von Stapeln mit den Merkmalen des Anspruchs 6.

Vorteilhafte Ausführungsformen finden sich in den jeweiligen Unteransprüchen.

Die Erfindung geht von dem Gedanken aus, dass die Schwerkraft eingesetzt werden kann, um ein Trennelement in Anlage gegen einen bereits errichteten Stapel aus plattenförmigen Erzeugnissen zu halten. Dazu wird die Unterlage, auf der abgestapelt werden soll, um einen gewissen Winkel zur Horizontalen geneigt. Horizontale meint hier streng genommen die Horizontalebene, also die Ebene parallel zum Boden bzw. eine Ebene senkrecht zur Vertikalrichtung. Auf diese Weise kann ein Trennelement gegen eine Seite eines auf der Unterlage bereits abgestapelten Stapels gelehnt werden und wird von der Schwerkraft an Ort und Stelle gehalten. So ist es möglich, ohne zusätzliche Vorrichtungen, die das Trennelement während des Abstapelns festhalten, weitere plattenförmige Erzeugnisse zur Bildung weiterer Stapel auf der Unterlage abzulegen.

Das erfindungsgemäße Verfahren zum Stapeln von plattenförmigen Erzeugnissen, bei welchem auf einer Unterlage, insbesondere einer Palette, wenigstens zwei benachbart angeordnete Stapel aus den plattenförmigen Erzeugnissen gebildet werden, wobei zwischen benachbarten Stapeln ein Trennelement eingebracht wird, zeichnet sich dadurch aus, dass folgende Schritte ausgeführt werden:
i) ein Stapel wird aus den plattenförmigen Erzeugnissen auf der Unterlage gebildet,
ii) die Unterlage wird vor oder nach Schritt i) um einen Winkel zur Horizontalebene geneigt,
iii) nach Schritt i) und ii) wird ein Trennelement, insbesondere ein plattenförmiges Trennwandelement, zur Anlage gegen den Stapel gebracht,
iv) nach Schritt iii) wird ein weiterer Stapel aus den plattenförmigen Erzeugnissen auf der Unterlage gebildet.

Die Unterlage kann grundsätzlich auf verschiedene Arten zur Horizontalebene geneigt werden. Beispielsweise kann die Tragvorrichtung, auf der die Unterlage platziert wird, eine einzige Kippachse oder eine Mehrzahl Kippachsen aufweisen. Im letzteren Fall kann die Unterlage dann erst um die eine Kippachse um einen bestimmten Winkel geneigt werden und dann um die andere Kippachse. Im letzteren Fall ist es auch möglich, an der Tragvorrichtung Anschläge nicht lediglich zu einer Seite hin, sondern zu zwei Seiten hin vorzusehen, sodass ein auf der Unterlage bzw. der Tragvorrichtung abgelegter Stapel dann über Eck an den beiden Anschlägen anliegt.

Bevorzugt wird die Unterlage beim Neigen gegen den wenigstens einen Anschlag geschoben. Zunächst wird bevorzugt ein äußerer, d. h. nahe dem Rand der Unterlage liegender, Stapel gebildet.

Natürlich ist das erfindungsgemäße Verfahren nicht auf die Erstellung von lediglich zwei Stapeln auf der Unterlage beschränkt. Bevorzugt können auch mehr als zwei Stapel gebildet werden, wobei jeweils zwischen zwei benachbarten Stapeln ein Trennelement angeordnet wird. Bevorzugt ist daher vorgesehen, dass die Schritte iii) und iv) zur Bildung wenigstens eines weiteren Stapels wiederholt werden.

Ist das Abstapeln auf der Unterlage abgeschlossen, ist bevorzugt vorgesehen, dass nach Bildung des letzten Stapels die Neigung der Unterlage rückgängig gemacht wird, so dass die Aufstellfläche der Unterlage parallel zur Horizontalen bzw. zur Horizontalebene verläuft. In diesem Zustand kann dann eine Weiterverarbeitung dieser Stapelzusammenstellung erfolgen. Beispielsweise kann nach Bilden des letzten Stapels die Unterlage mit den darauf befindlichen Stapeln konfektioniert werden. So kann die Zusammenstellung beispielsweise mit einer Hülle, z. B. einer Folie oder dergleichen, umhüllt und für den Weitertransport vorbereitet werden.

Wie die Stapel nach dem erfindungsgemäßen Verfahren erzeugt werden, ist grundsätzlich in das Belieben des Fachmanns gestellt, grundsätzlich kann von Hand gestapelt werden, bevorzugt ist allerdings, dass das Stapeln der plattenförmigen Erzeugnisse automatisiert, z. B. mittels eines Stapelgerätes, insbesondere mittels eines Roboters, erfolgt. Natürlich sind andere Möglichkeiten der Erstellung der Stapel denkbar. Dasselbe gilt auch für das Auflösen eines erfindungsgemäß erstellten Stapels in entsprechender Weise.

Bei einem Verfahren zum Auflösen von Stapeln aus plattenförmigen Erzeugnissen aus Holz oder Holzersatzstoffen, sind auf einer Unterlage, insbesondere einer Palette, wenigstens zwei benachbart angeordnete Stapel aus den plattenförmigen Erzeugnissen vorhanden. Zwischen benachbarten Stapeln ist dabei ein Trennelement eingebracht. Folgende Schritte werden beim Auflösen ausgeführt:
i) plattenförmige Erzeugnisse eines Stapels werden einzeln oder gruppenweise vom Stapel entnommen, bis dieser Stapel aufgelöst ist,
ii) die Unterlage wird vor oder nach Schritt i) um einen Winkel (α) zur Horizontalebene geneigt,
iii) nach Schritt i) und ii) wird das Trennelement, insbesondere ein plattenförmiges Trennwandelement, entfernt,
iv) nach Schritt iii) wird ein weiterer Stapel aufgelöst.

Die Schritte i) bis iv) können zur Auflösung wenigstens eines weiteren Stapels wiederholt werden. Vor oder nach Auflösung des letzten Stapels kann die Neigung der Unterlage rückgängig gemacht werden, so dass die Aufstellfläche der Unterlage parallel zur Horizontalebene verläuft. Wie das Stapeln der Stapel kann auch das Auflösen der Stapel mittels eines Stapelgerätes, insbesondere mittels eines Roboters, erfolgen.

Eine examplarische Vorrichtung zur Durchführung der oben beschriebenen Verfahren weist ein Stapelgerät, beispielsweise ein solches, das als Roboter ausgebildet ist, auf, welches eine Einrichtung zum Aufnehmen und Ablegen von plattenförmigen Erzeugnissen aufweist. Eine solche Einrichtung kann z. B. als Saugeinrichtung oder als Greifer ausgebildet sein. Dabei umfasst die Vorrichtung weiter eine gegenüber der Horizontalen schwenkbar ausgebildete Tragvorrichtung, die zur Aufnahme der Unterlage ausgebildet ist. Durch das Verschwenken der Tragvorrichtung kann erreicht werden, dass ein Winkel zwischen der Horizontalen und der Unterlage eingestellt wird.

Bevorzugt ist hierzu vorgesehen, dass an der Tragvorrichtung ein Anschlagelement, wobei es sich im einfachsten Fall einfach um eine Anschlagwand handelt, angeordnet ist, gegen welches die Unterlage und/oder Schmalseiten von plattenförmigen Erzeugnissen eines ersten Stapels infolge der Schwerkraft zur Anlage gebracht werden, wenn die Tragvorrichtung zur Horizontalebene geneigt ist.

Die Erfindung wird nachfolgend anhand der Figuren 5 bis 10 näher erläutert. Dabei werden die aus den Figuren 1 bis 4 bekannten Bezugszeichen weiterverwendet.

Fig. 5 zeigt eine Seitenansicht auf eine erfindungsgemäße Vorrichtung.

Fig. 6 zeigt eine Seitenansicht auf einen Teil der erfindungsgemäßen Vorrichtung 1 im Bereich der Tragvorrichtung während der Bildung eines ersten Stapels aus plattenförmigen Erzeugnissen auf der Unterlage.

Fig. 7 zeigt eine weitere zu Fig. 6 ähnliche Ansicht nach Bildung des ersten Stapels und beim Einbringen des Trennelements.

Fig. 8 zeigt eine weitere zu Fig. 6 ähnliche Ansicht beim Erstellen eines zweiten Stapels aus plattenförmigen Erzeugnissen auf der Unterlage.

Fig. 9 zeigt eine weitere zu Fig. 6 ähnliche Ansicht nach Fertigstellen des zweiten Stapels.

Fig. 10 zeigt eine weitere zu Fig. 6 ähnliche Ansicht bei der Konfektionierung der auf der Unterlage befindlichen Stapel aus plattenförmigen Erzeugnissen.

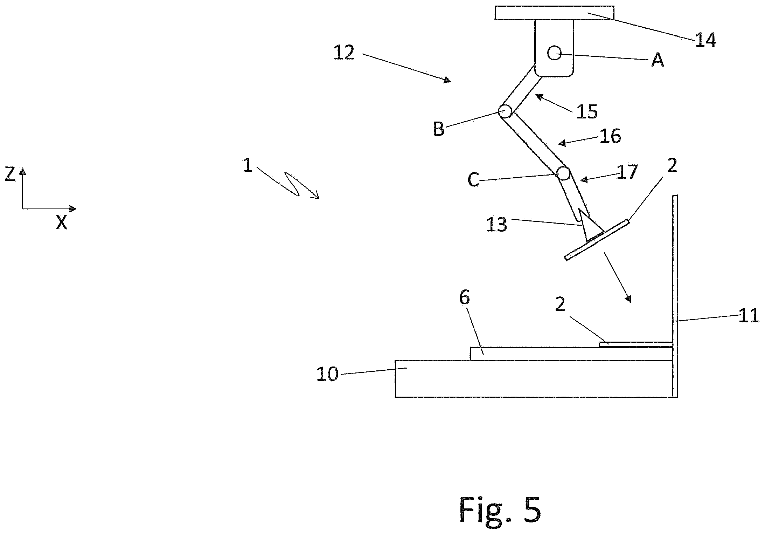

Die in Fig. 5 dargestellte Vorrichtung 1, bei der X die Horizontalrichtung und Z die Vertikalrichtung festlegen, weist eine Tragvorrichtung 10 auf, auf der eine Unterlage, wie z. B. eine Palette, 6 abgelegt werden kann. Ein Anschlag 11, bei dem es sich bevorzugt um eine Anschlagwand handelt, befindet sich an einer Seite der Tragvorrichtung 10, sodass die Unterlage 6 und darauf abgestapelte plattenförmige Erzeugnisse aus Holz oder Holzersatzstoffen 2 (im Folgenden auch nur Platte genannt) mit ihren Schmalseiten gegen den Anschlag 11 geschoben werden können. Zum Abstapeln dient bevorzugt ein Stapelgerät 12, welches Platten 2 aufnehmen und ablegen kann. Bevorzugt handelt es sich - wie in Fig. 5 angedeutet - um einen Roboter mit einer Mehrzahl Gelenkarme 15 bis 17, die über Gelenke A bis C miteinander und mit einem Grundabschnitt 14 verbunden sind. Dieser Grundabschnitt 14 kann seinerseits in allen Raumrichtungen verschieblich und/oder drehbar ausgebildet sein. Am Gelenkarm 17 ist eine Einrichtung 13 zum Ablegen und Aufnehmen von Platten 2, z. B. eine Saugvorrichtung oder ein Greifer, angeordnet. Von dieser Einrichtung 13 wird eine Platte 2 aufgenommen und auf der Unterlage 6 bzw. einer Platte 2 abgelegt.

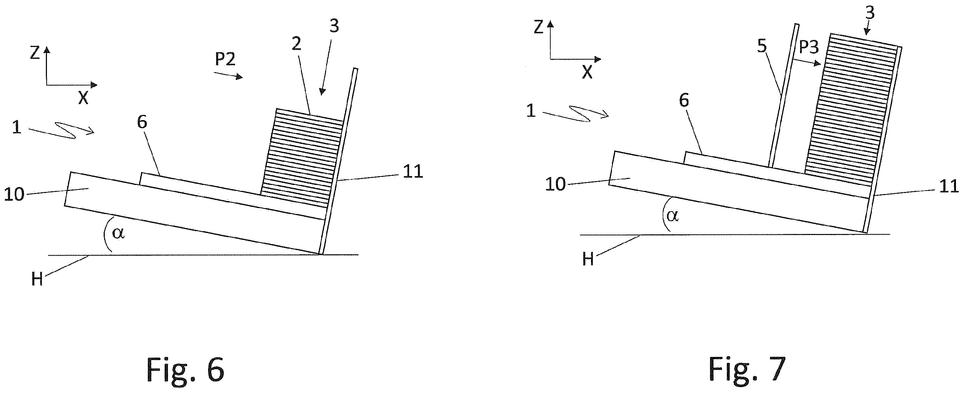

Der Ablageprozess wird nun anhand der Figuren 6 bis 9 erläutert.

In Fig. 6 ist zu erkennen, dass die Tragvorrichtung 10 - und damit die Unterlage 6 und der Stapel 3 - um einen Winkel α zur Horizontalen H geneigt sind. Dies hat zur Folge, dass der Stapel 3, der aus den Platten 2 entsteht, aufgrund der Schwerkraft zusammen mit der Unterlage 6 gegen den Anschlag 11 geschoben und dort gehalten wird (die resultierende Kraft wirkt in Richtung P2). Der Neigungswinkel α sollte dabei bevorzugt so gewählt werden, dass die Reibung zwischen den Platten 2 untereinander bzw. zwischen einer Platte 2 und der Unterlage 6 sowie zwischen der Unterlage 6 und der Tragvorrichtung 10 kleiner oder gleich der Kraftkomponente in Richtung P2 ist. Auf diese Weise wird sichergestellt, dass alle Teile infolge der Gewichtskraft auch gegen den Anschlag 11 geschoben und in Anlage mit dem Anschlag 11 gehalten werden. Dabei ist es allerdings nicht zwingend erforderlich, dass jede einzelne den Stapel 3 bildende Platte tatsächlich bis an den Anschlag herangeführt wird. Platten können grundsätzlich einzeln oder aber auch paketweise, d. h. mehrere Platten auf einmal, gestapelt werden.

Ist ein erster Stapel 3 vollständig, so wird, wie in Fig. 7 dargestellt, das hier als Trennwand 5 dargestellte Trennelement in Richtung P3 gegen die dem Anschlag 11 abgewandte Seite des Stapels 3 gelehnt. Grundsätzlich kann das Trennelement 5 dabei von der Seite oder von oben gegen den Stapel 3 gesetzt werden oder seitlich davorgeschoben werden. Aufgrund der Neigung der Tragvorrichtung 10 liegt dieses Trennelement 5 dann mehr oder weniger flächig am Stapel 3 an und kann auch nicht umkippen. Der erste Stapel kann grundsätzlich auch schon gebildet werden, bevor die Unterlage 6 geneigt wird. Erst wenn die Trennwand 5 an den bereits gebildeten ersten Stapel angelegt wird, wird in diesem Fall die Neigung der Unterlage 6 erfolgen, so dass die Trennwand 5 nicht umkippt, sondern vom ersten Stapel 3 gestützt wird.

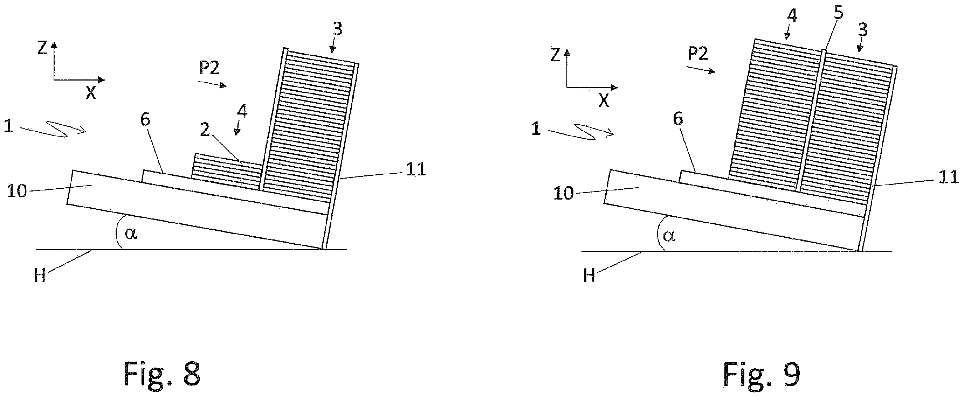

Nun wird der nächste Stapel 4 durch sukzessives Ablegen weiterer Platten 2 auf der Unterlage 6 gebildet, Fig. 8, wobei die Neigung der Tragvorrichtung 10 dafür sorgt, dass auch die Schmalseiten der den Stapel 4 bildenden Platten gegen das Trennelement 5 geschoben und dort gehalten werden. Dies geschieht bis auch der zweite Stapel 4 vollständig ist, Fig. 9. Der Prozess des Einbringens eines Trennelements 5 und nachfolgendes Bilden eines weiteren Stapels kann einmal oder mehrmals wiederholt werden. Grundsätzlich ist es auch möglich, die Neigung der Unterlage 6 in dem Moment aufzuheben und die Unterlage 6 wieder in die Horizontale zu bringen, sobald der zweite Stapel 4 hoch genug ist, um das Umkippen des Trennelements 5 zu verhindern.

Das Auflösen der auf der Unterlage 6 vorhandenen Stapel 3, 4 funktioniert auf ähnliche Weise, nämlich prinzipiell durch Umkehren der oben beschriebenen Schritte. Zunächst wird also ein erster Stapel durch sukzessives Abtragen aufgelöst, wobei durch Neigen der Unterlage 6 bzw. der Tragvorrichtung 10 dafür gesorgt wird, dass eine zwischen den Stapeln 3, 4 vorhandene Trennvorrichtung 5 nicht umfällt. Ist der erste Stapel vollständig oder soweit abgetragen, dass die Trennvorrichtung 5 entnommen werden kann, geschieht dies, bevor der nächste Stapel abgetragen wird.

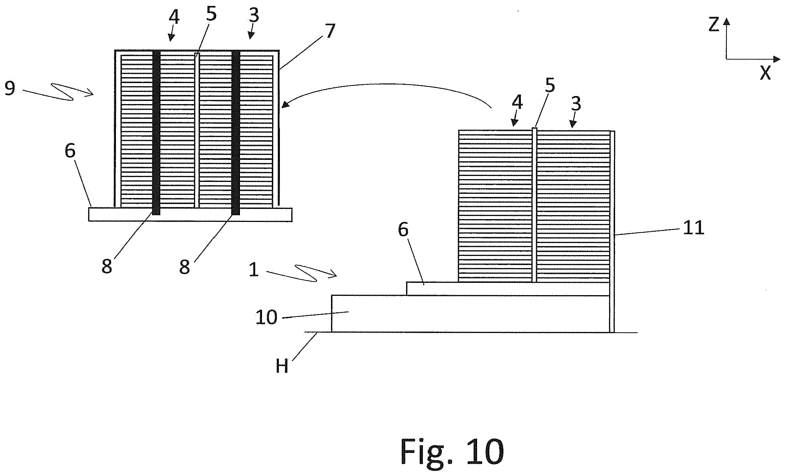

Ist die Zusammenstellung aus Unterlage 6 und darauf befindlichen Stapeln 3, 4 abgeschlossen, kann diese Zusammenstellung zu einem Transportgut 9 konfektioniert werden. Dazu kann - wie in Fig. 10 gezeigt - die Tragvorrichtung 10 wieder in die Horizontale verlagert werden (Winkel α gleich 0° zur Horizontalen H), dies ist aber nicht zwingend erforderlich. Insgesamt kann mit einer entsprechenden Vorrichtung die Unterlage bzw. Palette 6 von der Tragvorrichtung abgehoben oder beispielsweise durch Rollen oder andere Vordereinrichtungen weitertransportiert werden. Zur weiteren Konfektionierung kann das Gebilde beispielsweise mit einer Folie oder Hülle 7 umhüllt und mit entsprechenden Fixierelementen wie z. B. Gurten oder Seilen 8 fixiert werden. Die so gebildete Zusammenstellung 9 ist danach für den Transport vorbereitet.

### Bezugszeichenliste:

- 1: Stapelvorrichtung
- 2: plattenförmiges Erzeugnis
- 3: Stapel aus 2
- 4: weiterer Stapel aus 2
- 5: Trennelement
- 6: Unterlage
- 7: Hülle
- 8: Fixierelement
- 9: konfektionierte Palette
- 10: Tragvorrichtung
- 11: Anschlagelement
- 12: Stapelgerät
- 13: Einrichtung zum Ablegen und Aufnehmen von 2
- 14: Grundabschnitt von 12
- 15: Gelenkarm von 12
- 16: Gelenkarm von 12
- 17: Gelenkarm von 12

- A: Gelenkachse zwischen 14 und 15
- B: Gelenkachse zwischen 15 und 16
- C: Gelenkachse zwischen 14 und 15

- H: Horizontalebene
- X: Horizontalrichtung
- Z: Vertikalrichtung

- α: Neigungswinkel zwischen H und 10

## Patentansprüche

1. Verfahren zum Stapeln von plattenförmigen Erzeugnissen (2) aus Holz oder Holzersatzstoffen, bei welchem auf einer Unterlage (6), insbesondere einer Palette, wenigstens zwei benachbart angeordnete Stapel (3, 4) aus den plattenförmigen Erzeugnissen gebildet werden, wobei zwischen benachbarten Stapeln (3, 4) ein Trennelement (5) eingebracht wird,
**gekennzeichnet dadurch,**
**dass** folgende Schritte ausgeführt werden:
i) ein Stapel (3) wird aus den plattenförmigen Erzeugnissen (2) auf der Unterlage (6) gebildet,
ii) die Unterlage (6) wird vor oder nach Schritt i) um einen Winkel (α) zur Horizontalebene (H) geneigt,
iii) nach Schritt i) und ii) wird ein Trennelement (5), insbesondere ein plattenförmiges Trennwandelement, zur Anlage gegen den Stapel (3) gebracht,
iv) nach Schritt iii) wird ein weiterer Stapel (4) aus den plattenförmigen Erzeugnissen (2) auf der Unterlage (6) gebildet.

2. Verfahren nach Anspruch 1,
**dadurch gekennzeichnet,**
**dass** die Schritte iii) und iv) zur Bildung wenigstens eines weiteren Stapels wiederholt werden.

3. Verfahren nach einem der Ansprüche 1 oder 2,
**dadurch gekennzeichnet,**
**dass** nach Bildung des letzten Stapels (3, 4) die Neigung der Unterlage rückgängig gemacht wird, so dass die Aufstellfläche der Unterlage (6) parallel zur Horizontalebene (H) verläuft.

4. Verfahren nach einem der vorigen Ansprüche,
**dadurch gekennzeichnet,**
**dass** nach Bilden des letzten Stapels (3, 4) die Unterlage (6) mit den darauf befindlichen Stapeln (3, 4) konfektioniert wird.

5. Verfahren nach einem der vorigen Ansprüche,
**dadurch gekennzeichnet,**
**dass** das Stapeln der plattenförmigen Erzeugnisse (2) mittels eines Stapelgerätes (12), insbesondere mittels eines Roboters, erfolgt.

6. Verfahren zum Auflösen von Stapeln aus plattenförmigen Erzeugnissen (2) aus Holz oder Holzersatzstoffen, bei welchem auf einer Unterlage (6), insbesondere einer Palette, wenigstens zwei benachbart angeordnete Stapel (3, 4) aus den plattenförmigen Erzeugnissen vorhanden sind, wobei zwischen benachbarten Stapeln (3, 4) ein Trennelement (5) eingebracht ist,
**gekennzeichnet dadurch,**
**dass** folgende Schritte ausgeführt werden:
i) plattenförmige Erzeugnisse (2) eines Stapels (4) werden einzeln oder gruppenweise vom Stapel (4) entnommen, bis dieser Stapel (4) aufgelöst ist,
ii) die Unterlage (6) wird vor oder nach Schritt i) um einen Winkel (α) zur Horizontalebene (H) geneigt,
iii) nach Schritt i) und ii) wird das Trennelement (5), insbesondere ein plattenförmiges Trennwandelement, entfernt,
iv) nach Schritt iii) wird ein weiterer Stapel (3) aufgelöst.

7. Verfahren nach Anspruch 6,
**dadurch gekennzeichnet,**
**dass** die Schritte i) bis iv) zur Auflösung wenigstens eines weiteren Stapels wiederholt werden.

8. Verfahren nach einem der Ansprüche 6 oder 7,
**dadurch gekennzeichnet,**
**dass** vor oder nach Auflösung des letzten Stapels (3, 4) die Neigung der Unterlage (6) rückgängig gemacht wird, so dass die Aufstellfläche der Unterlage (6) parallel zur Horizontalebene (H) verläuft.

9. Verfahren nach einem der Ansprüche 6 bis 8,
**dadurch gekennzeichnet,**
**dass** das Auflösen der Stapel mittels eines Stapelgerätes (12), insbesondere mittels eines Roboters, erfolgt.

## Claims

1. Method for stacking plate-shaped products (2) of wood or wood substitutes in which at least two stacks (3, 4) of plate-shaped products are formed adjacent one another on a support (6), in particular pallet, wherein a separating element (5) is introduced between adjacent stacks (3, 4), **characterised in that** the following steps are carried out:
i) a stack (3) is formed from the plate-shaped products (2) on the support (6),
ii) the support (6) is inclined about an angle (α) to the horizontal plane (H) before or after step i)
iii) a separating element (5), in particular a plate-shaped partition wall element is brought to bear against the stack (3) after step i) and ii);
iv) further stack (4) of plate-shaped products (2) is formed on the support (6) after step iii).

2. Method according to Claim 1
**characterised in that** the steps iii) and iv) are repeated in order to form at least one further stack.

3. Method according to one of Claims 1 or 2
**characterised in that** after the formation of the last stack (3, 4) the incline of the support is reverted so that the bearing surface of the support (6) runs parallel to the horizontal plane (H).

4. Method according to one of the preceding claims
**characterised in that** after the formation of the last stack (3, 4) the support (6) is packaged with the stacks (3, 4) located thereon.

5. Method according to one of the preceding claims **characterised in that** the stacking of the plate-shaped products (2) is carried out by means of a stacking apparatus (12), in particular by means of a robot.

6. Method for dismantling stacks of plate-shaped products (2) of wood or wood substitutes in which at least two stacks (3, 4) of plate-shaped products are present adjacent one another on a support (6,) in particular a pallet, wherein a separating element (5) is introduced between adjacent stacks (3, 4),
**characterised in that** the following steps are carried out
i) plate-shaped products (2) of a stack (4) are removed individually or in groups from the stack (4) until this stack (4) is dismantled;
ii) the support (6) is inclined by an angle (α) to the horizontal plane (H) before or after step i);
iii) the separating element (5), in particular a plate-shaped partition wall element, is removed after step i) and ii);
iv) a further stack (3) is dismantled after step iii).

7. Method according to Claim 6
**characterised in that** that the steps i) to iv) are repeated for the dismantling of at least one further stack.

8. Method according to one of Claims 6 or 7
**characterised in that** before or after the dismantling of the last stack (3, 4) the incline of the support (6) is reverted so that the supporting face of the support (6) runs parallel to the horizontal plane (H).

9. Method according to one of Claims 6 to 8
**characterised in that** the dismantling of the stacks is carried out by means of a stacking apparatus (12), in particular by means of a robot.

## Revendications

1. Procédé d'empilement de produits en plaques (2) en bois ou en un matière de substitution de bois, dans lequel au moins deux piles (3, 4) disposées adjacentes sont formées à partir des produits en plaques (2) sur une base (6), en particulier une palette, dans lequel un élément séparateur (5) est introduit entre des piles adjacentes (3, 4),
**caractérisé en ce**
**que** les étapes suivantes sont exécutées:
i) une pile (3) est formée à partir des produits en plaques (2) sur la base (6),
ii) avant ou après l'étape i), la base (6) est inclinée selon un angle (α) par rapport au plan horizontal (H),
iii) après l'étape i) et ii), un élément séparateur (5), en particulier un élément de cloison en forme de plaque, est appuyé contre la pile (3),
iv) après l'étape iii), une autre pile (4) est formée à partir des produits en plaques (2) sur la base (6).

2. Procédé selon la revendication 1,
**caractérisé en ce**
**que** les étapes iii) et iv) pour former au moins une autre pile sont répétées.

3. Procédé selon l'une quelconque des revendications 1 ou 2,
**caractérisé en ce**
**qu'**après formation de la dernière pile (3, 4), l'inclinaison de la base est annulée de sorte que la surface de pose de la base (6) s'étend parallèlement au plan horizontal (H).

4. Procédé selon l'une quelconque des revendications précédentes, **caractérisé en ce**
**qu'**après formation de la dernière pile (3, 4), la base (6) avec les piles (3) qui s'y trouvent est confectionnée.

5. Procédé selon l'une quelconque des revendications précédentes, **caractérisé en ce**
**que** l'empilement des produits en plaques (2) est effectué par l'intermédiaire d'un appareil d'empilage (12), surtout par l'intermédiaire d'un robot.

6. Procédé pour défaire des piles de produits en plaques (2) en bois ou en un matière de substitution de bois, dans lequel au moins deux piles (3, 4) disposées adjacentes de produits en plaques (2) existent sur une base (6), en particulier une palette, dans lequel un élément séparateur (5) est introduit entre des piles adjacentes (3, 4),
**caractérisé en ce**
**que** les étapes suivantes sont exécutées:
i) des produits en plaques (2) d'une pile (4) sont retirés de la pile (4) individuellement ou en groupe jusqu'à ce que ladite pile (4) soit défaite,
ii) la base (6) est inclinée selon un angle (α) par rapport au plan horizontal (H) avant ou après l'étape i),
iii) après l'étape i) et ii), l'élément séparateur (5), surtout un élément de cloison en forme de plaque, est éliminé,
iv) après l'étape iii), une autre pile (3) est défaite.

7. Procédé selon la revendication 6,
**caractérisé en ce**
**que** les étapes i) à iv) pour défaire au moins une autre pile sont répétées.

8. Procédé selon l'une quelconque des revendications 6 ou 7,
**caractérisé en ce**
**qu'**avant ou après que la dernière pile (3, 4) est défaite, l'inclinaison de la base (6) est annulée, de sorte que la surface de pose de la base (6) s'étend parallèlement au plan horizontal (H).

9. Procédé selon l'une quelconque des revendications 6 à 8,
**caractérisé en ce**
**que** les piles sont défaites par l'intermédiaire d'un appareil d'empilage (12), surtout par l'intermédiaire d'un robot.
